# EUROPEAN PATENT APPLICATION

(11) **EP 4 632 657 A1**
(43) Date of publication of application: **15.10.2025**
(21) Application number: 23916025.2
(22) Date of filing: 13.01.2023
(51) Int. Cl.: G06Q 30/0202, G06Q 10/087, G06Q 10/04

(54) **DEMAND PREDICTION DEVICE, DEMAND PREDICTION METHOD, AND DEMAND PREDICTION PROGRAM**

(71) Applicant: MITSUBISHI ELECTRIC CORPORATION, Chiyoda-ku Tokyo 100-8310 (JP)
(72) Inventor: CHO, Koji, Tokyo 100-8310 (JP); SHIBATA, Hideya, Tokyo 100-8310 (JP)
(74) Representative: Pfenning, Meinig & Partner mbB
(86) International application number: PCT/JP2023/000767
(87) International publication number: WO 2024/150404

(57) **Abstract**

A future inventory estimation unit (22) assumes that an inventory increases due to an order being placed in accordance with an order condition and an order quantity indicated in order model information (61) and the inventory decreases in accordance with a transition of a past inventory quantity indicated in past inventory information (62), and estimates a future inventory quantity at a supply destination. A demand forecasting unit (23) forecasts that a demand for the order quantity indicated in the order model information (61) occurs to a supplier at a time point when the order condition indicated in the order model information (61) is satisfied in the future inventory quantity estimated by the future inventory estimation unit (22).

## Description

### Technical Field

The present disclosure relates to a technology for forecasting a demand.

### Background Art

In supply chains such as those in manufacturing or agriculture, a series of commercial transactions from the procurement of raw materials to the sale of final products, is conducted by a plurality of business operators. In these supply chains, a technique for forecasting a demand for a product is being considered with the aim of reducing inventory management costs.

Here, forecasting a demand means to forecast a future order quantity of a product from a supply destination. Hereinafter, forecasting a demand is referred to as demand forecasting.

In general demand forecasting technology, forecasts are made by learning time series data such as past order records. Patent Literature 1 describes a technology that improves the accuracy of demand forecasting by learning past demand occurrence trends from order records and adjusting a demand forecasting technique.

### Citation List

### Patent Literature

Patent Literature 1:JP 2022-101879 A

### Summary of Invention

### Technical Problem

In the technique of performing a forecast by estimating from order performance data, a trend in the occurrence of a demand over the long term such as seasonality or periodicity, as described in Patent Literature 1, it is not possible to perform demand forecasting that follows detailed daily demand fluctuations.

The present disclosure aims to enable the performance of demand forecasting that follows detailed daily demand fluctuations.

### Solution to Problem

A demand forecasting apparatus according to the present disclosure includes:
a future inventory estimation unit to assume that an inventory increases due to an order being placed in accordance with an order condition and an order quantity indicated in order model information and the inventory decreases in accordance with a transition of a past inventory quantity indicated in past inventory information at a supply destination of a forecasting subject item, and to estimate a future inventory quantity at the supply destination, and
a demand forecasting unit to forecast that a demand for the order quantity indicated in the order model information occurs to a supplier at a time point when the order condition indicated in the order model information is satisfied in the future inventory quantity estimated by the future inventory estimation unit.

### Advantageous Effects of Invention

In the present disclosure, a future inventory quantity is estimated using a change in a past inventory quantity, and a demand is forecast from the future inventory quantity. Thereby, it is possible to perform demand forecasting that follows detailed daily demand fluctuations by taking into account fluctuations in the most recent inventory quantity.

### Brief Description of Drawings

Fig. 1 is an explanatory diagram of a subject for demand forecasting according to Embodiment 1.
Fig. 2 is a configuration diagram of a demand forecasting system 100 according to Embodiment 1.
Fig. 3 is a configuration diagram of a demand forecasting apparatus 10 according to Embodiment 1.
Fig. 4 is a flowchart of an input reception time process according to Embodiment 1.
Fig. 5 is an explanatory diagram of order model information 61 according to Embodiment 1.
Fig. 6 is an explanatory diagram of past inventory information 62 according to Embodiment 1.
Fig. 7 is a flowchart of a demand forecasting time process according to Embodiment 1.
Fig. 8 is an explanatory diagram of a future inventory estimation process according to Embodiment 1.
Fig. 9 is an explanatory diagram of a demand forecasting result 64 according to Embodiment 1.
Fig. 10 is a configuration diagram of the demand forecasting apparatus 10 according to Modification 1.
Fig. 11 is a configuration diagram of the demand forecasting apparatus 10 according to Embodiment 2.
Fig. 12 is an explanatory diagram of trade flow structure information 65 according to Embodiment 2.
Fig. 13 is a flowchart of the demand forecasting time process according to Embodiment 2.
Fig. 14 is an explanatory diagram of the future inventory estimation process according to Embodiment 2.
Fig. 15 is an explanatory diagram of a subject for demand forecasting according to Embodiment 2.
Fig. 16 is a configuration diagram of the demand forecasting apparatus 10 according to Embodiment 3.
Fig. 17 is an explanatory diagram of logistics information 66 according to Embodiment 3.
Fig. 18 is a flowchart of the demand forecasting time process according to Embodiment 3.
Fig. 19 is an explanatory diagram of the past inventory estimation process according to Embodiment 3.
Fig. 20 is a configuration diagram of the demand forecasting apparatus 10 according to Embodiment 4.
Fig. 21 is an explanatory diagram of component configuration information 68 according to Embodiment 4.

### Description of Embodiments

### Embodiment 1.

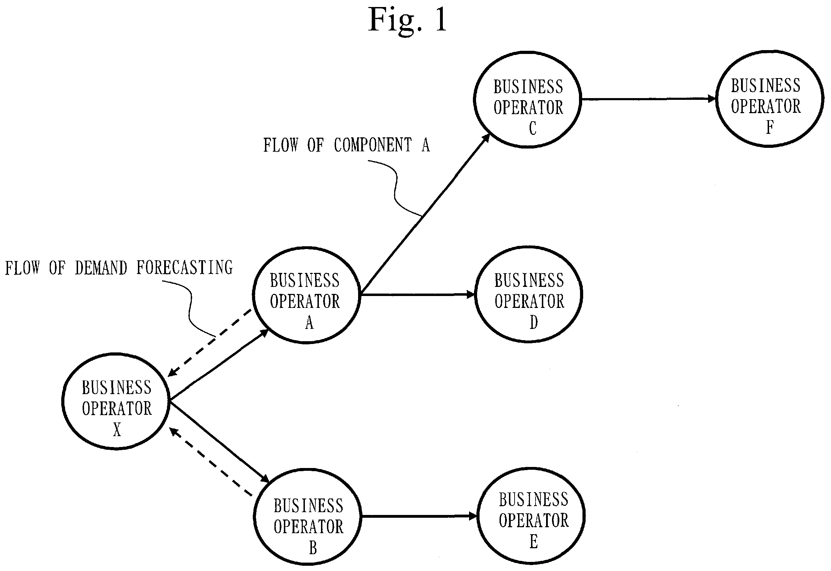

Demand forecasting in Embodiment 1 is performed independently for each business operator and each product. Therefore, in Embodiment 1, as illustrated in Fig. 1, a forecasting subject item that is an item subject to demand forecasting is referred to as a "component A. Then, as an example, a case will be described where demand forecasting is performed for a demand for the "component A" that is generated by a "business operator A" that is a supply destination of the "component A" to a "business operator X" that is a supplier.

Here, even when demand forecasting is performed for a "business operator B" or a "component B," it is possible to perform demand forecasting through the same processing as in the case where demand forecasting is performed for the demand for the "component A" that is generated by the "business operator A" to the "business operator X.

In demand forecasting in Embodiment 1, it is possible to perform a forecast for each unit period, which is any unit of time such as a daily unit or a weekly unit. In the following, as an example, a case will be described where the unit period is set to one day and demand forecasting is performed on the daily unit.

### *** Description of Configuration ***

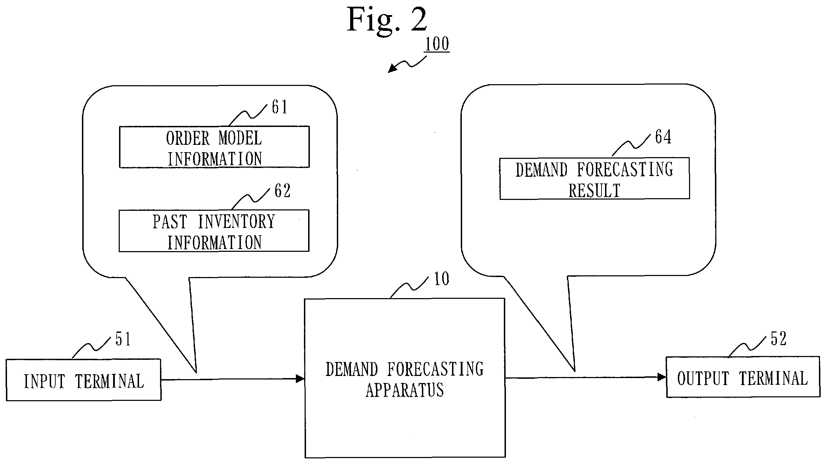

A configuration of a demand forecasting system 100 according to Embodiment 1 will be described with reference to Fig. 2.

The demand forecasting system 100 includes a demand forecasting apparatus 10, an input terminal 51, and an output terminal 52.

The demand forecasting apparatus 10 is a computer such as a server. The demand forecasting apparatus 10 receives order model information 61 and past inventory information 62 from the input terminal 51, performs demand forecasting, and outputs a demand forecasting result 64 to the output terminal 52.

The input terminal 51 is a terminal for operating the demand forecasting apparatus 10. A specific example of the input terminal 51 is a PC, a tablet, a smartphone, or the like. PC is an abbreviation for Personal Computer. The demand forecasting apparatus 10 may also serve as the input terminal 51. Further, there may be a plurality of input terminals 51.

The output terminal 52 is a terminal for outputting processing contents by the demand forecasting apparatus 10 to an inventory planner. A specific example of the output terminal 52 is a PC, a tablet, a smartphone, or the like. The input terminal 51 may also serve as the output terminal 52. Further, there may be a plurality of output terminals 52.

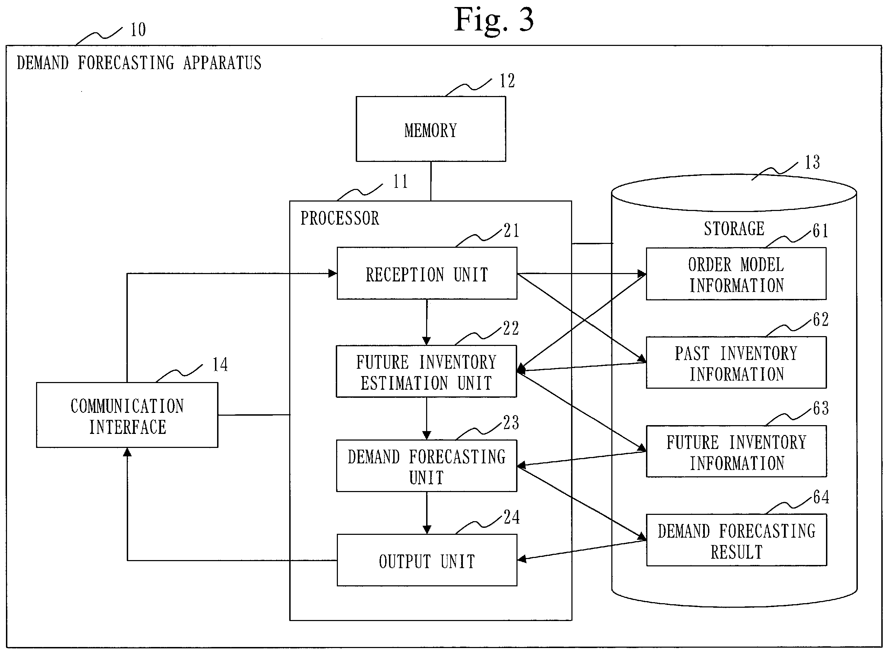

A configuration of the demand forecasting apparatus 10 according to Embodiment 1 will be described with reference to Fig. 3.

The demand forecasting apparatus 10 is a computer.

The demand forecasting apparatus 10 includes pieces of hardware which are a processor 11, a memory 12, a storage 13, and a communication interface 14. The processor 11 is connected to other pieces of hardware via signal lines and controls the other pieces of hardware.

The processor 11 is an IC that performs processing. IC is an abbreviation for Integrated Circuit. Specific examples of the processor 11 are a CPU, a DSP, and a GPU. CPU is an abbreviation for Central Processing Unit. DSP is abbreviation for Digital Signal Processor. GPU is abbreviation for Graphics Processing Unit.

The memory 12 is a storage device that stores data temporarily. Specific examples of the memory 12 are an SRAM and a DRAM. SRAM is abbreviation for Static Random Access Memory. DRAM is abbreviation for Dynamic Random Access Memory.

The storage 13 is a storage device that keeps data. A specific example of the storage 13 is an HDD. HDD is an abbreviation for Hard Disk Drive. Alternatively, the storage 13 may be a portable recording medium such as an SD (registered trademark) memory card, CompactFlash (registered trademark), NAND flash, a flexible disk, an optical disc, a compact disc, a Blu-ray (registered trademark) disc, and a DVD. SD is an abbreviation for Secure Digital. DVD is an abbreviation for Digital Versatile Disk.

The communication interface 14 is an interface for communicating with external devices. Specific examples of the communication interface 14 are ports such as Ethernet (registered trademark), USB, and HDMI (registered trademark). USB is abbreviation for Universal Serial Bus. HDMI is abbreviation for High-Definition Multimedia Interface.

The demand forecasting apparatus 10 includes a reception unit 21, a future inventory estimation unit 22, a demand forecasting unit 23, and an output unit 24, as functional components. The functions of the individual functional components of the demand forecasting apparatus 10 are implemented by software.

The storage 13 stores programs that implement the functions of the individual functional components of the demand forecasting apparatus 10. These programs are loaded into the memory 12 by the processor 11 and executed by the processor 11. Thereby, the functions of the individual functional components of the demand forecasting apparatus 10 are implemented.

The storage 13 stores the order model information 61, the past inventory information 62, future inventory information 63, and the demand forecasting result 64 in the process of operation of the demand forecasting apparatus 10.

Fig. 3 illustrates only one processor 11. However, there may be a plurality of processors 11, and the plurality of processors 11 may cooperate with each other to execute the programs that implement the individual functions.

### *** Description of Operation ***

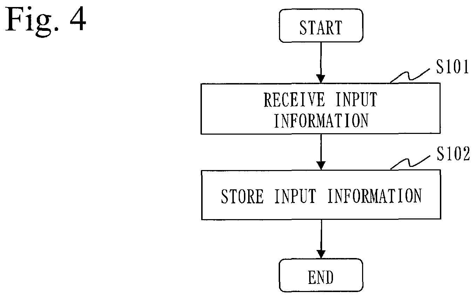

The operation of the demand forecasting apparatus 10 according to Embodiment 1 will be described with reference to Figs. 4 to 9.

An operation procedure of the demand forecasting apparatus 10 according to Embodiment 1 is equivalent to a demand forecasting method according to Embodiment 1. Further, a program that implements the operation of the demand forecasting apparatus 10 according to Embodiment 1 is equivalent to a demand forecasting program according to Embodiment 1.

The operation of the demand forecasting apparatus 10 includes an input reception time process and a demand forecasting time process.

The input reception time process according to Embodiment 1 will be described with reference to Fig. 4.

### (Step S101: Reception Process)

The reception unit 21 receives the input of the order model information 61 and the past inventory information 62 from the input terminal 51. However, the order model information 61 is required only at the time of first reception, and the reception unit 21 does not necessarily need to receive the order model information 61 each time the input reception time process is executed.

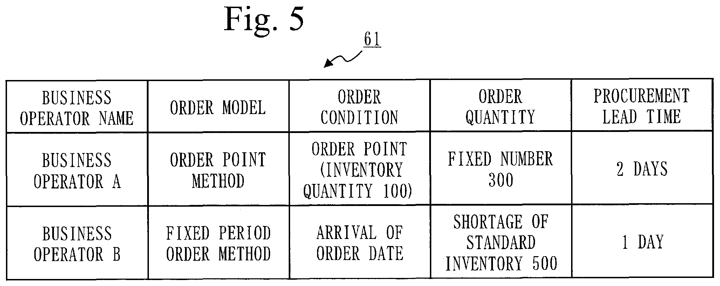

The order model information 61 according to Embodiment 1 will be described with reference to Fig. 5.

The order model information 61 includes one or more sets of a business operator name, an order model, an order condition, an order quantity, and a procurement lead time. The order condition is a condition for placing an order, and the order is placed when the order condition is satisfied. The order quantity is a quantity to be ordered when the order condition is satisfied. The procurement lead time is a period from when an order for a product is placed to when the product arrives and is managed as inventory.

For example, it is assumed that the order model of the business operator A is the order point method. In this case, an order point indicating the order condition and the order quantity are included as information corresponding to the order point method. Therefore, a set of information that includes the business operator A, the order point method, the order point, the order quantity, and the procurement lead time is set in the order model information 61. The order point method is an order method in which an order is placed when the inventory quantity falls below a certain threshold value called the order point.

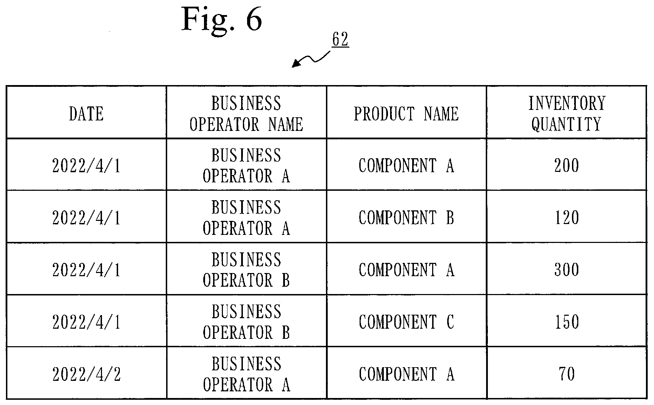

The past inventory information 62 according to Embodiment 1 will be described with reference to Fig. 6.

The past inventory information 62 includes one or more sets of a date, a business operator name, a product name, and an inventory quantity.

### (Step S102: Storage Process)

The reception unit 21 writes the order model information 61 and the past inventory information 62 into the storage 13. However, the order model information 61 is recorded only when the order model information 61 is received in step S101.

Here, the order model information 61 and the past inventory information 62 are written into the storage 13. However, the order model information 61 and the past inventory information 62 may be written into a storage device provided outside the demand forecasting apparatus 10 instead of the storage 13.

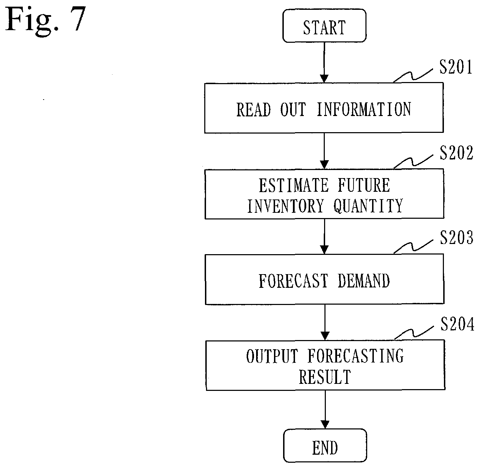

The demand forecasting time process according to Embodiment 1 will be described with reference to Fig. 7.

### (Step S201: Readout Process)

The future inventory estimation unit 22 reads out from the order model information 61 stored in the storage 13, information on the business operator A that is a supply destination of the component A that is a forecasting subject item. Specifically, the future inventory estimation unit 22 reads out the order model, the order point, the order quantity, and the procurement lead time of the business operator A.

Further, the future inventory estimation unit 22 reads out from the past inventory information 62 stored in the storage 13, information on the inventory quantity relating to the component A of the business operator A that is a supply destination. Specifically, the future inventory estimation unit 22 reads out the dates and the inventory quantities for the component A of the business operator A in the most recent reference period.

### (Step S202: Future Inventory Estimation Process)

The future inventory estimation unit 22 estimates a future inventory quantity at the business operator A that is a supply destination, based on the order model information 61 and the past inventory information 62 read out in step S201. At this time, the future inventory estimation unit 22 assumes that the inventory increases due to an order being placed in accordance with the order condition and the order quantity indicated in the order model information 61 at the business operator A, and the inventory decreases in accordance with the transition of a past inventory quantity indicated in the past inventory information 62, and estimates the future inventory quantity. In the case of the business operator A, the order condition is the order point.

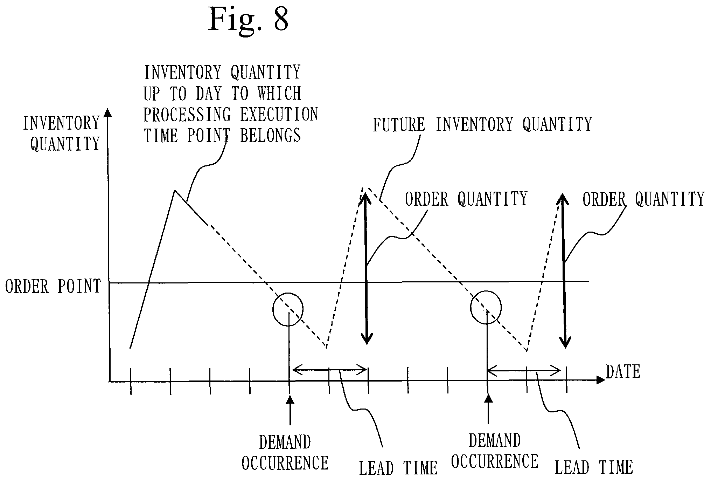

### The specific description will be given with reference to Fig. 8.

The future inventory estimation unit 22 calculates the transition of the future inventory quantity for each day during a forecasting period starting from the day after the day to which a processing execution time point belongs, based on the order model information 61 and the past inventory information 62 read out in step S201. Then, the future inventory estimation unit 22 writes the transition of the daily future inventory quantity as the future inventory information 63 into the storage 13.

The future inventory estimation unit 22 sets each day during the forecasting period starting from the day after the day to which the processing execution time point belongs in the order from the oldest to the newest, as a subject day. The future inventory estimation unit 22 calculates the inventory quantity on the subject day by adding the inventory quantity that increases on the subject day and subtracting the inventory quantity that decreases on the subject day, to/from the inventory quantity on the day before the subject day. Thereby, the future inventory estimation unit 22 estimates the inventory quantity for each day during the forecasting period.

When the order condition is satisfied on the day before only the procurement lead time of the subject day, the future inventory estimation unit 22 treats the order quantity as the inventory quantity that increases on the subject day. Here, since the order model is the order point method, when the inventory quantity on the day before only the procurement lead time is less than or equal to the order point indicated in the order model information 61, a quantity equal to the order quantity indicated in the order model information 61 is the inventory quantity that increases. When the order condition is not satisfied on the day before only the procurement lead time of the subject day, the future inventory estimation unit 22 sets the inventory quantity that increases on the subject day to 0.

The future inventory estimation unit 22 calculates a statistical value of an inventory decrease quantity per day from the transition of the inventory quantity during the most recent reference period read out in step S201. The future inventory estimation unit 22 treats the statistical value as the inventory quantity that decreases on the subject day. A value such as an average value or a median value is used as the statistical value.

### (Step S203: Demand Forecasting Process)

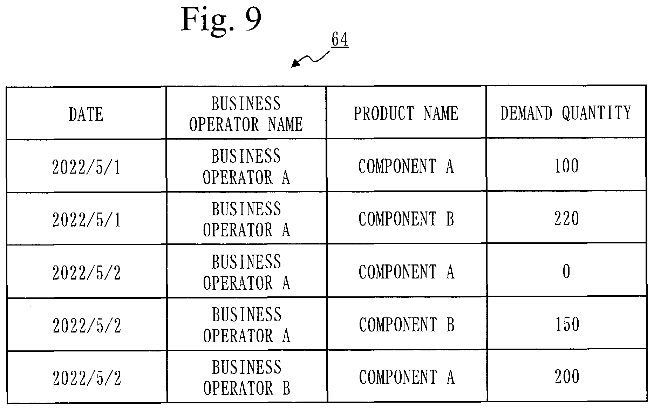

The demand forecasting unit 23 calculates a demand forecasting value for each day of the forecasting period. Then, the demand forecasting unit 23 writes the demand forecasting value for each day as the demand forecasting result 64 into the storage 13. As illustrated in Fig. 9, the demand forecasting result 64 includes a set of a date, a business operator name, a product name, and a demand quantity.

Specifically, the demand forecasting unit 23 forecasts that the demand occurs for the order quantity indicated in the order model information 61 for the business operator X that is a supplier, at a time point when the order condition indicated in the order model information 61 is satisfied in the future inventory quantity estimated in step S202.

### (Step S204: Output Process)

The output unit 24 outputs the demand forecasting result 64 to the output terminal 52.

### *** Effects of Embodiment 1 ***

As described above, the demand forecasting apparatus 10 according to Embodiment 1 estimates a future inventory quantity using a transition of a past inventory quantity, and forecasts a demand from the future inventory quantity. Thereby, it is possible to perform demand forecasting that follows detailed daily demand fluctuations by taking into account fluctuations in the most recent inventory quantity.

In other words, the demand forecasting apparatus 10 performs demand forecasting based on daily inventory information on the business operator A that is a supply destination, instead of performing demand forecasting using an order record of the business operator X. Thereby, it is possible to detect demand fluctuations before being reflected in the order record, and to follow detailed daily demand fluctuations. In other words, by taking into account fluctuations in the most recent inventory quantity, highly accurate demand forecasting is possible without waiting for the order record to accumulate, even when the market environment changes significantly.

### *** Other Configurations ***

### <Modification 1>

In Embodiment 1, the individual functional components are implemented by software. However, as Modification 1, the individual functional components may be implemented by hardware. Differences from Embodiment 1 regarding this Modification 1 will be described.

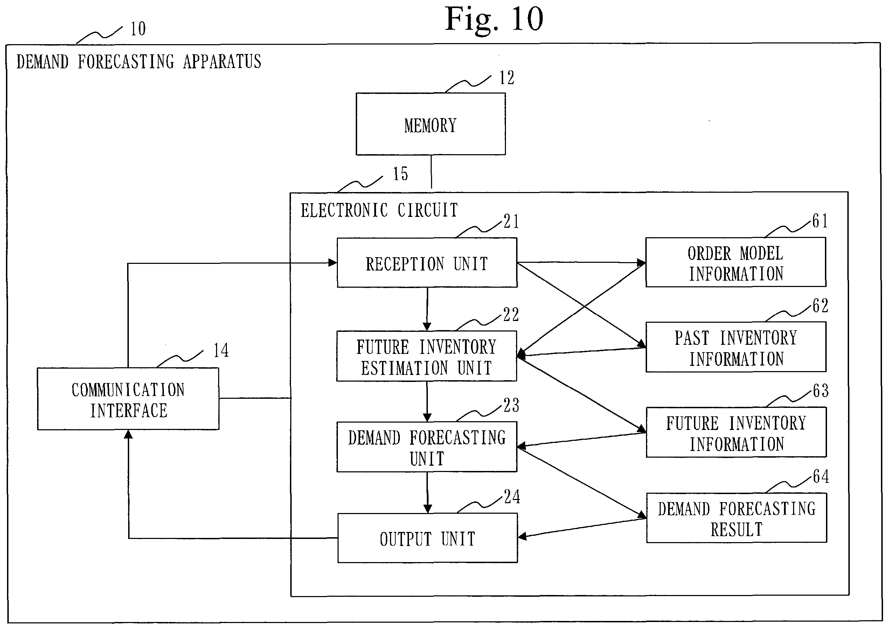

The configuration of the demand forecasting apparatus 10 according to Modification 1 will be described with reference to Fig. 10.

When the individual functional components are implemented by hardware, the demand forecasting apparatus 10 includes an electronic circuit 15, instead of the processor 11, the memory 12, and the storage 13. The electronic circuit 15 is a dedicated circuit that implements the functions of the individual functional components, the memory 12, and the storage 13.

The electronic circuit 15 is assumed to be a single circuit, a composite circuit, a programmed processor, a parallel programmed processor, a logic IC, a GA, an ASIC, or an FPGA. GA is abbreviation for Gate Array. ASIC is abbreviation for Application Specific Integrated Circuit. FPGA is abbreviation for Field-Programmable Gate Array.

The individual functional components may be implemented by a single electronic circuit 15, or the individual functional components may be distributed across a plurality of electronic circuits 15 and realized.

### <Modification 2>

As Modification 2, some of the individual functional components may be implemented by hardware, and other individual functional components may be implemented by software.

The processor 11, the memory 12, the storage 13, and the electronic circuit 15 are referred to as processing circuitry. In other words, the functions of the individual functional components are implemented by the processing circuitry.

### Embodiment 2.

Embodiment 2 differs from Embodiment 1 in that the inventory decrease quantity is determined based on a result of demand forecasting for a downstream business operator in a flow between business operators of a forecasting subject item. In Embodiment 2, this difference will be described, and the explanation for the same points will be omitted.

### *** Description of Configuration ***

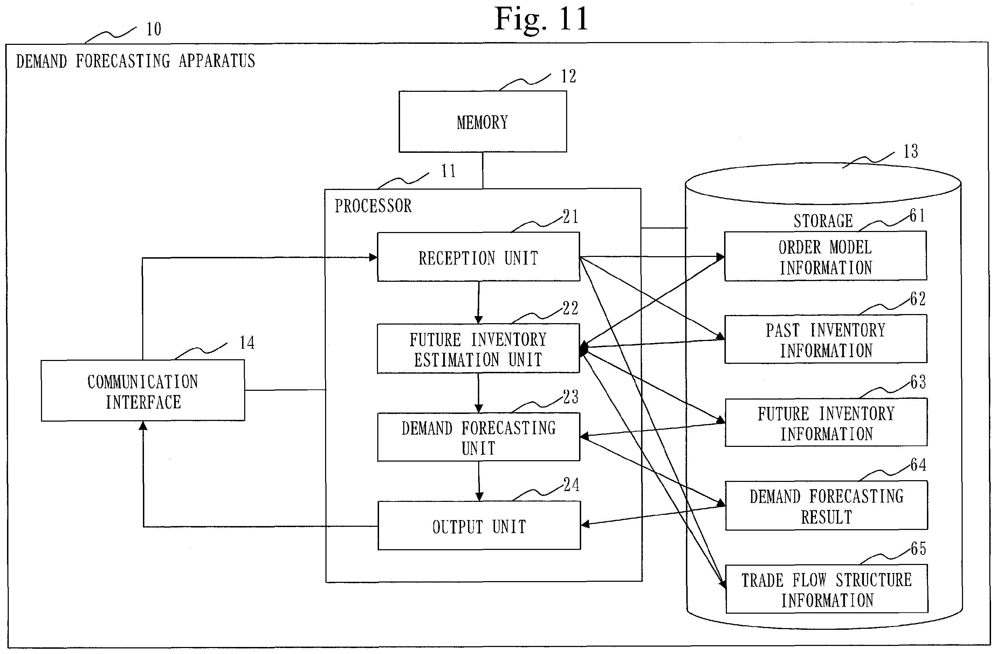

The configuration of the demand forecasting apparatus 10 according to Embodiment 2 will be described with reference to Fig. 11.

The demand forecasting apparatus 10 differs from that of Fig. 3 in that the storage 13 stores trade flow structure information 65.

### *** Description of Operation ***

The input reception time process according to Embodiment 2 will be described with reference to Fig. 4.

### (Step S101: Reception Process)

The reception unit 21 receives the input of the trade flow structure information 65 from the input terminal 51, in addition to the input of the order model information 61 and the past inventory information 62. However, the order model information 61 is required only at the time of first reception, and the reception unit 21 does not necessarily need to receive the order model information 61 each time the input reception time process is executed.

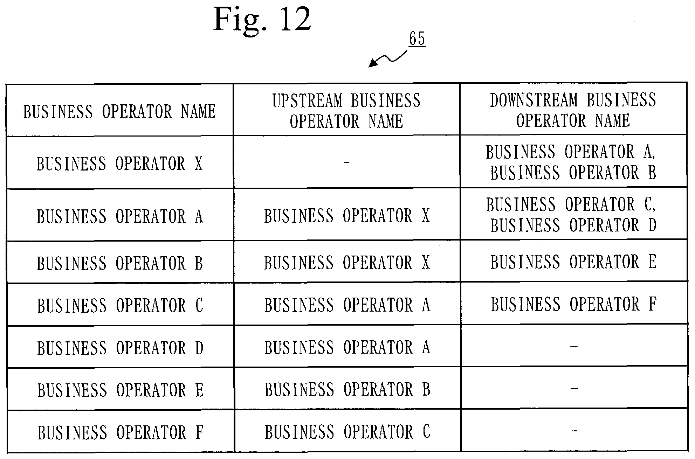

The trade flow structure information 65 according to Embodiment 2 will be described with reference to Fig. 12.

The trade flow structure information 65 indicates flows between business operators of the component A that is a forecasting subject item. The trade flow structure information 65 includes a business operator name, an upstream business operator name, and a downstream business operator name.

The upstream business operator name indicates an upstream business operator of a business operator indicated in the business operator name. The downstream business operator name indicates a downstream business operator of a business operator indicated in the business operator name. The upstream business operator is a supplier that supplies the component A to a business operator indicated in the business operator name. The downstream business operator is a supply destination to which a business operator indicated in the business operator name supplies the component A.

### (Step S102: Storage Process)

The reception unit 21 writes the trade flow structure information 65 to the storage 13 in addition to the order model information 61 and the past inventory information 62. However, the order model information 61 is recorded only when the order model information 61 is received in step S101.

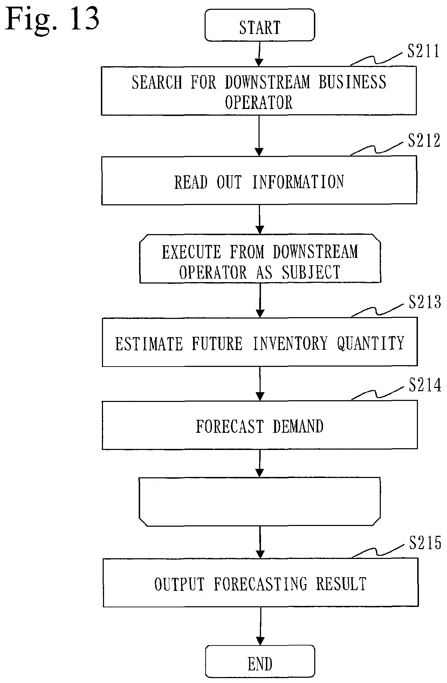

The demand forecasting time process according to Embodiment 2 will be described with reference to Fig. 13.

### (Step S211: Downstream Search Process)

The future inventory estimation unit 22 refers to the trade flow structure information 65 stored in the storage 13 to search for a business operator that is downstream of the business operator A that is a supply destination of the component A that is a forecasting subject item.

Specifically, the future inventory estimation unit 22 identifies business operators indicated in the downstream business operator name of the business operator A in the trade flow structure information 65. The future inventory estimation unit 22 identifies a business operator indicated in the downstream business operator name of each identified business operator. This is repeated until there are no more business operators indicated in the downstream business operator name. Thereby, the search is made for all business operators that are downstream of the business operator A.

In the case of the trade flow structure information 65 illustrated in Fig. 12, a business operator C and a business operator D are identified as business operators that are downstream of the business operator A. A business operator F is identified as a business operator that is downstream of the business operator C. Since there are no business operators that are downstream of the business operator D, the search is terminated. Since there are no business operators that are downstream of the business operator F, the search is terminated.

### (Step S212: Readout Process)

The future inventory estimation unit 22 reads out the order model information 61 and the past inventory information 62 for each business operator (here, the business operators C, D, and F) searched for in step S211 in addition to the business operator A.

Specifically, the future inventory estimation unit 22 sets the business operator A and each business operator searched for in step S211 as subject business operators. The future inventory estimation unit 22 reads out information on the subject business operators from the order model information 61. Further, the future inventory estimation unit 22 reads out from the past inventory information 62, information on the inventory quantity relating to the component A of the subject business operators.

A subject business operator is selected in the order of the downstream business operators, and the processes of steps S213 and S214 are executed.

### (Step S213: Future Inventory Estimation Process)

The future inventory estimation unit 22 estimates the future inventory quantity for the subject business operator based on the order model information 61 and the past inventory information 62 read out in step S212.

Specifically, the future inventory estimation unit 22, as with Embodiment 1, sets each day during the forecasting period starting from the day after the day to which the processing execution time point belongs in the order from the oldest to the newest, as a subject day. The future inventory estimation unit 22 calculates the inventory quantity on the subject day by adding the inventory quantity that increases on the subject day and subtracting the inventory quantity that decreases on the subject day, to/from the inventory quantity on the day before the subject day.

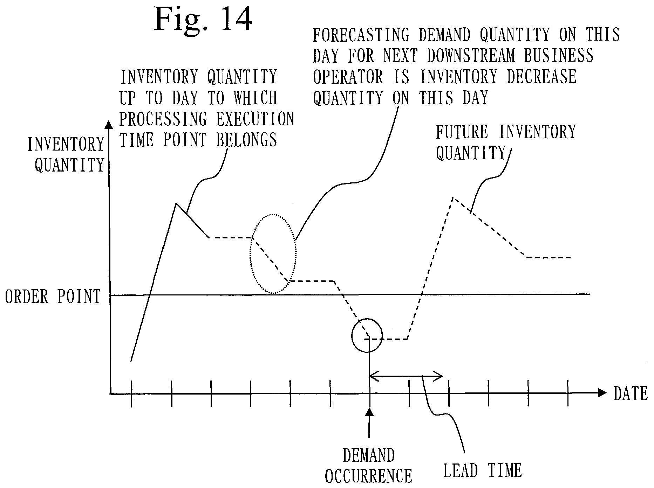

However, in Embodiment 2, when there are no downstream business operators for the subject business operator, the future inventory estimation unit 22 treats the statistical value as the inventory quantity that decreases on the subject day, as with Embodiment 1. On the other hand, when there are downstream business operators for the subject business operator, as illustrated in Fig. 14, the future inventory estimation unit 22 treats a demand from the immediate downstream business operator as the inventory quantity that decreases on the subject day. In Fig. 14, the order model is assumed to be the order point method. When there is a plurality of immediate downstream business operators, the future inventory estimation unit 22 treats the total of demands of the plurality of business operators as the inventory quantity that decreases on the subject day.

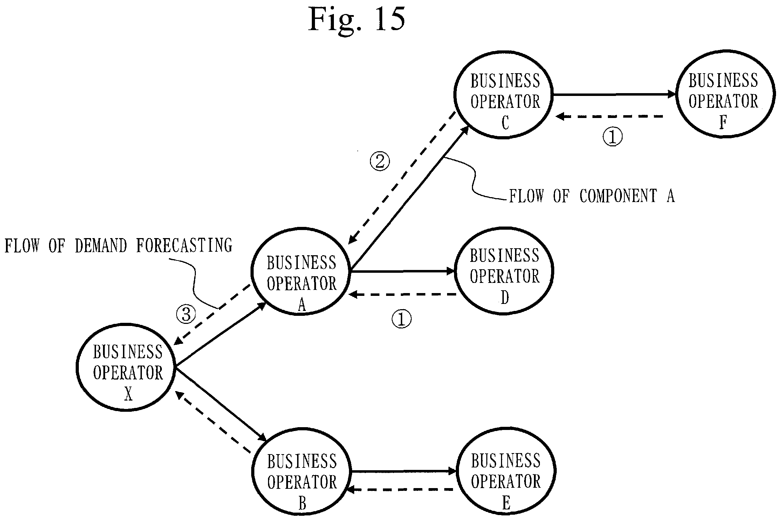

### A specific example will be described with reference to Fig. 15.

Here, the subject business operator is selected from the downstream business operators. Therefore, first, the business operator F or the business operator D is selected as the subject business operator. After the processing for the business operator F is completed, the business operator C is selected as the subject business operator. After the processing for the business operator C and the business operator D are completed, the business operator A is selected as the subject business operator.

For the business operators F and the business operator D, there are no downstream business operators. Therefore, the daily inventory quantity is calculated in the same manner as in Embodiment 1. For the business operator C and the business operator A, there are the downstream business operators. Therefore, the daily inventory quantity is calculated by treating the inventory quantity that decreases on the subject day as the demand from the immediate downstream business operator.

When the future inventory for the business operator C is calculated, the daily inventory decrease quantity for the business operator C is decided based on a result of demand forecasting for an order executed by the business operator F to the business operator C. When the future inventory quantity for the business operator A is calculated, the daily inventory decrease quantity for the business operator A is decided based on a result of demand forecasting for an order executed by the business operator C and the business operator D to the business operator A.

### (Step S214: Demand Forecasting Process)

The demand forecasting unit 23 forecasts that a demand for the order quantity indicated in the order model information 61 for an immediate upstream business operator occurs at a time point when the future inventory quantity estimated in step S213 satisfies the order condition indicated in the order model information 61.

The process of step S215 is the same as the process of step S204 in Fig. 7.

### *** Effects of Embodiment 2 ***

As described above, the demand forecasting apparatus 10 according to Embodiment 2 determines an inventory decrease quantity based on a result of demand forecasting for a downstream business operator in a flow between business operators of a forecasting subject item. Thereby, it is possible to accurately estimate a future inventory quantity for a business operator that is a supplier. As a result, high-precision demand forecasting is possible.

### *** Other Configurations ***

### <Modification 3>

For the downstream business operators of the business operator A, demand forecasting may be performed by a method, such as a known method, other than the methods described in Embodiments 1 and 2. Then, when demand forecasting is performed, which occurs from the business operator A to the business operator X, a demand for the business operator A from a downstream business operator forecast by any method, may be used as the inventory decrease quantity for the business operator A.

### Embodiment 3.

Embodiment 3 differs from Embodiment 2 in that the inventory quantity on the day to which the processing execution time point belongs is estimated by referring to logistics information 66 indicating a transition that occurs in a logistics process for a forecasting subject item. In Embodiment 3, this difference will be described, and the explanation for the same points will be omitted.

Here, a case will be described in which a function is added to Embodiment 1. However, it is also possible to add the function to Embodiment 2.

### *** Description of Configuration ***

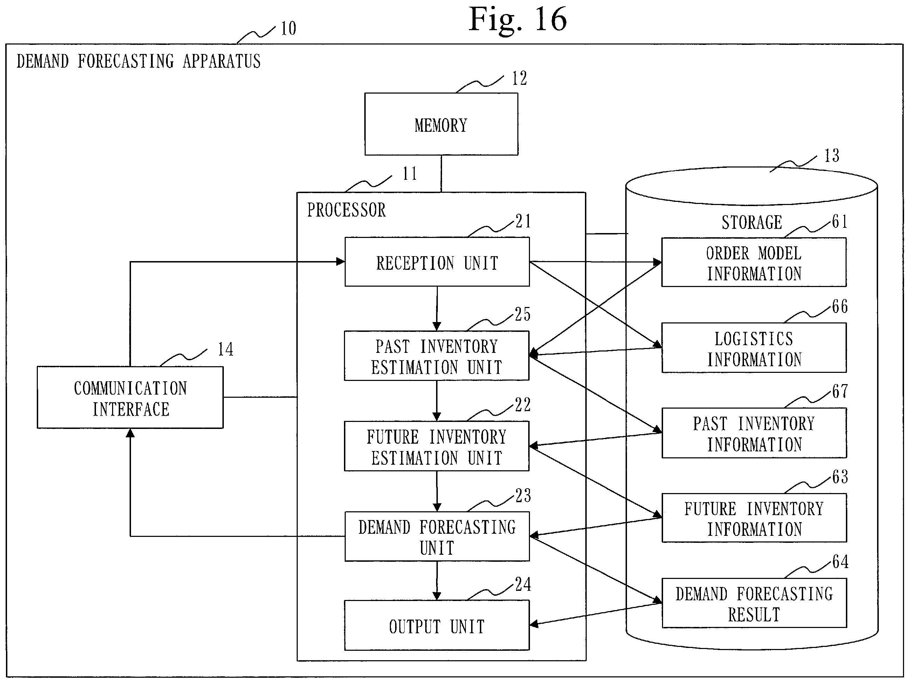

The configuration of the demand forecasting apparatus 10 according to Embodiment 3 will be described with reference to Fig. 16.

The demand forecasting apparatus 10 differs from that of Fig. 3 in that the demand forecasting apparatus 10 includes a past inventory estimation unit 25 as a functional component. The function of the past inventory estimation unit 25 is implemented by software or hardware, as with the other functional components.

Further, the demand forecasting apparatus 10 differs from that of Fig. 3 in that the logistics information 66 and past inventory information 67 are stored in the storage 13.

### *** Description of Operation ***

The input reception time process according to Embodiment 3 will be described with reference to Fig. 4.

### (Step S101: Reception Process)

The reception unit 21 receives the input of the order model information 61 and the logistics information 66 from the input terminal 51. However, the order model information 61 is required only at the time of first reception, and the reception unit 21 does not necessarily need to receive the order model information 61 each time the input reception time process is executed.

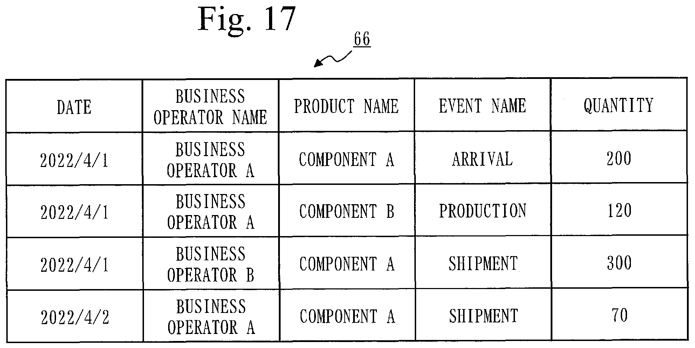

The logistics information 66 according to Embodiment 3 will be described with reference to Fig. 17.

The logistics information 66 indicates a transition that occurs in the logistics process for the forecasting subject item. The logistics information 66 includes a date, a business operator name, a product name, an event name, and a quantity. Here, the event name is the name of an event. The event refers to transitions of a product that occur in the logistics process, such as production, shipment, and arrival of the product. The quantity is the number of products that transits in the event.

### (Step S102: Storage Process)

The reception unit 21 writes the order model information 61 and the logistics information 66 into the storage 13. However, the order model information 61 is recorded only when the order model information 61 is received in step S101.

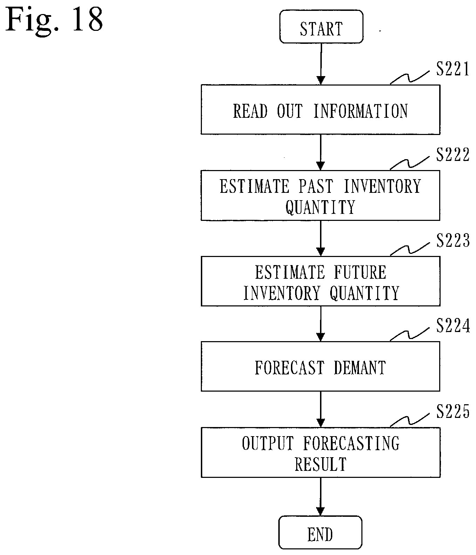

The demand forecasting time process according to Embodiment 3 will be described with reference to Fig. 18.

### (Step S221: Readout Process)

The future inventory estimation unit 22 reads out information on the business operator A from the order model information 61 stored in the storage 13. Further, the future inventory estimation unit 22 reads out the logistics information 66 stored in the storage 13.

### (Step S222: Past Inventory Estimation Process)

By referring to the logistics information 66, the past inventory estimation unit 25 estimates the inventory quantity of the component A that is the forecasting subject item for the business operator A that is a supply destination for each day of the most recent reference period up to the day to which the processing execution time point belongs. The past inventory estimation unit 25 writes the estimated daily inventory quantity into the storage 13 as the past inventory information 67.

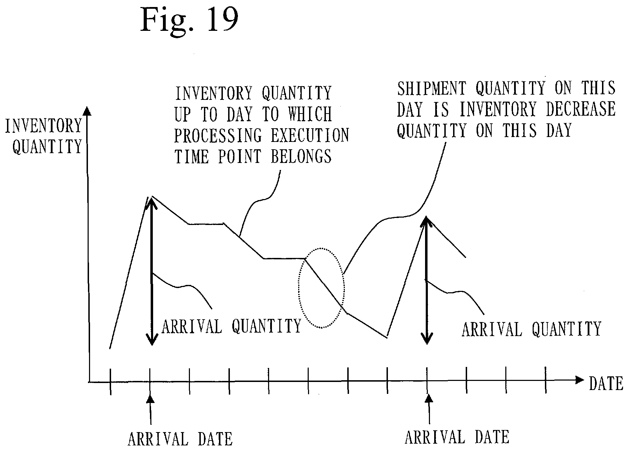

The detailed description will be given with reference to Fig. 19. The past inventory estimation unit 25 sets each day of the most recent reference period up to the day to which the processing execution time point belongs in the order from the oldest to the newest, as a subject day. The past inventory estimation unit 25 sets an initial value to the inventory quantity of the day before the oldest day of the most recent reference period. The past inventory estimation unit 25 calculates the inventory quantity on the subject day by adding the inventory quantity that increases on the subject day indicated in the logistics information 66 and subtracting the inventory quantity that decreases on the subject day indicated in the logistics information 66, to/from the inventory quantity on the day before the subject day. Thereby, the inventory quantity on the day to which the processing execution time belongs is estimated.

The inventory quantity that increases on the subject day is the quantity of the component A that arrives at the business operator A on the subject day as indicated in the logistics information 66. The inventory quantity that decreases on the subject day is the quantity of the component A that is shipped by the business operator A on the subject day as indicated in the logistics information 66.

### (Step S223: Future Inventory Estimation Process)

The future inventory estimation unit 22 uses the inventory quantity indicated in the past inventory information 67 estimated in step S222 as the past inventory quantity indicated in the past inventory information 62 to estimate the future inventory quantity for the business operator A in the same manner as in Embodiment 1.

The processes of steps S224 and S225 are the same as the processes of steps S203 and S204 in Fig. 7.

### *** Effects of Embodiment 3 ***

As described above, the demand forecasting apparatus 10 according to Embodiment 3 estimates an inventory quantity on the day to which a processing execution time point belongs by referring to the logistics information 66, and estimates a future inventory quantity. Thereby, it is possible to estimate the future inventory quantity for the business operator A even when information on the inventory quantity on the day to which the processing execution time point belongs cannot be obtained. As a result, it is possible to perform demand forecasting even when information on the inventory quantity on the day to which the processing execution time point belongs cannot be obtained.

### Embodiment 4.

Embodiment 4 differs from Embodiment 3 in that the inventory quantity on the day to which the processing execution time point belongs is estimated using transitions that occur in the logistics process for a usage product that is a product to be produced using a forecasting subject item as a component. In Embodiment 4, this difference will be described, and the explanation of the same points will be omitted.

### *** Description of Configuration ***

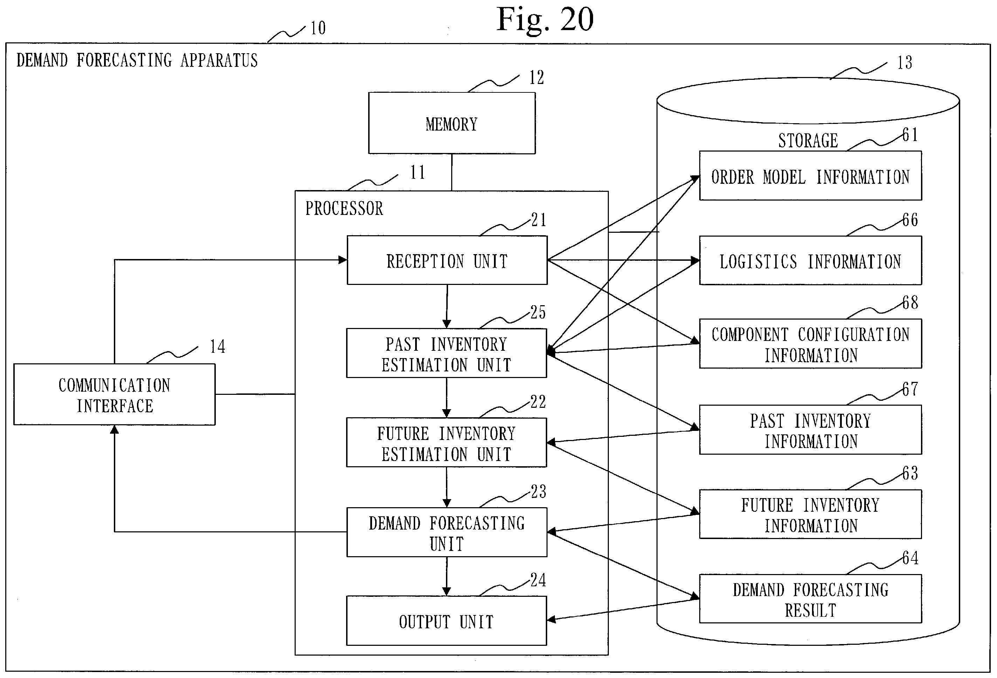

The configuration of the demand forecasting apparatus 10 according to Embodiment 4 will be described with reference to Fig. 20.

The demand forecasting apparatus 10 differs from that of Fig. 16 in that component configuration information 68 is stored in the storage 13.

### *** Description of Operation ***

The input reception time process according to Embodiment 4 will be described with reference to Fig. 4.

### (Step S101: Reception Process)

The reception unit 21 receives the input of the order model information 61, the logistics information 66, and the component configuration information 68 from the input terminal 51. However, the order model information 61 is required only at the time of the first reception, and the reception unit 21 does not necessarily need to receive the order model information 61 each time the input reception time process is executed.

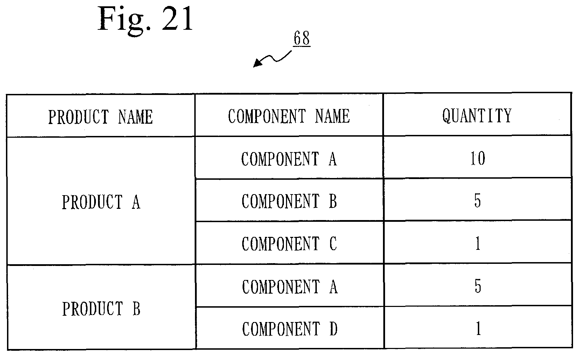

The component configuration information 68 according to Embodiment 4 will be described with reference to Fig. 21.

The component configuration information 68 indicates the number of components A that are forecasting subject items to be used in the usage product. The component configuration information 68 includes a product name, a component name, and a quantity. The product name is the name of the usage product. The component name is the name of a component to be used in the usage product, such as the component A. The quantity is the number of components to be used in the usage product.

### (Step S102: Storage Process)

The reception unit 21 writes the order model information 61, the logistics information 66, and the component configuration information 68 into the storage 13. However, the order model information 61 is recorded only when the order model information 61 is received in step S101.

The demand forecasting time process according to Embodiment 4 will be described with reference to Fig. 18.

### (Step S221: Readout Process)

The future inventory estimation unit 22 reads out information on the business operator A from the order model information 61 stored in the storage 13. Further, the future inventory estimation unit 22 reads out the logistics information 66 and the component configuration information 68 stored in the storage 13.

### (Step S222: Past Inventory Estimation Process)

The past inventory estimation unit 25, as with Embodiment 3, sets each day of the most recent reference period up to the day to which the processing execution time point belongs, as a subject day in the order from the oldest to the newest, and estimates the inventory quantity on the subject day.

At this time, the past inventory estimation unit 25 refers to the logistics information 66 to determine whether or not the business operator A produces the usage product that uses the component A as a functional component. When the business operator A does not produce the usage product that uses the component A as a functional component, the past inventory estimation unit 25 estimates the inventory quantity on the subject day, as with Embodiment 3. When the business operator A produces the usage product that uses the component A as a functional component, the past inventory estimation unit 25 specifies the inventory quantity that decreases on the subject day as described in the following, and estimates the inventory quantity on the subject day. Except for the method of specifying the inventory quantity that decreases on the subject day, it is the same as in Embodiment 3.

The past inventory estimation unit 25 calculates a production quantity and a shipment quantity of the usage product to be produced based on the component A, instead of obtaining from the logistics information 66, the quantity of the component A to be shipped. The past inventory estimation unit 25 specifies from the component configuration information 68, the quantity of the component A used in the production of the usage product or the quantity of the component A shipped as a form incorporated into the usage product, and uses that quantity as the inventory decrease quantity.

A specific example will be described with reference to Fig. 21.

When the shipment quantity of the component A is obtained, the past inventory estimation unit 25 first refers to the logistics information 66 to determine whether or not the business operator A performs the production of a usage product, such as a product A or a product B, having the component A as a functional component. For example, when the business operator A performs the production of the product B, the past inventory estimation unit 25 specifies from the logistics information 66, the production quantity or the shipment quantity of the product B on the subject day. Then, the past inventory estimation unit 25 specifies from the component configuration information 68, the quantity of the component A to be used in the product B, and calculates the total quantity of the component A used in the production or shipment of the product B. The past inventory estimation unit 25 uses the calculated total quantity as the inventory quantity that decreases on the subject day.

### *** Effects of Embodiment 4 ***

As described above, the demand forecasting apparatus 10 according to Embodiment 4 estimates an inventory quantity on the day to which a processing execution time point belongs, using transitions that occur in a logistics process for a usage product that is a product to be produced using a forecasting subject item as a component. Thereby, it is possible to appropriately estimate the inventory quantity of the forecasting subject item whose track is lost in the logistics information 66. In other words, it is possible to appropriately estimate the inventory quantity even when the forecasting subject item whose track is lost in the logistics information 66 due to a change in shape during a distribution process, or the like.

It should be noted that the term "unit" in the above description may be replaced with "circuit," "process," "procedure," "processing," or "processing circuitry".

The embodiments and modifications of the present disclosure have been described above. Among these embodiments and modifications, some may be practiced by combination. Alternatively, one or some of these embodiment and modifications may be practiced partly. The present disclosure is not limited to the above embodiments and modifications, and various modifications can be made as necessary.

### Reference Signs List

10: demand forecasting apparatus; 11: processor; 12: memory; 13: storage; 14: communication interface; 15: electronic circuit; 21: reception unit; 22: future inventory estimation unit; 23: demand forecasting unit; 24: output unit; 25: past inventory estimation unit; 51: input terminal; 52: output terminal; 61: order model information; 62: past inventory information; 63: future inventory information; 64: demand forecasting result; 65: trade flow structure information; 66: logistics information; 67: past inventory information; 68: component configuration information.

## Claims

1. A demand forecasting apparatus comprising:
a future inventory estimation unit to assume that an inventory increases due to an order being placed in accordance with an order condition and an order quantity indicated in order model information and the inventory decreases in accordance with a transition of a past inventory quantity indicated in past inventory information at a supply destination of a forecasting subject item, and to estimate a future inventory quantity at the supply destination, and
a demand forecasting unit to forecast that a demand for the order quantity indicated in the order model information occurs to a supplier at a time point when the order condition indicated in the order model information is satisfied in the future inventory quantity estimated by the future inventory estimation unit.

2. The demand forecasting apparatus according to claim 1, wherein
the demand forecasting apparatus forecasts a demand that occurs in each unit period, and
the future inventory estimation unit, for each unit period during a forecasting period starting from the unit period next to the unit period to which a processing execution time point belongs in the order from the oldest to the newest, to estimate an inventory quantity in each unit period during the forecasting period by calculating an inventory quantity in a subject unit period by adding an inventory quantity that increases in the subject unit period and subtracting an inventory quantity that decreases in the subject unit period, to/from an inventory quantity in the unit period before the subject unit period.

3. The demand forecasting apparatus according to claim 2, wherein
when the order condition is satisfied in a unit period before only a procurement lead time of the subject unit period, the future inventory estimation unit treats the order quantity as an inventory quantity that increases in the subject unit period.

4. The demand forecasting apparatus according to claim 2 or 3, wherein
the future inventory estimation unit calculates from a transition of an inventory quantity indicated in the past inventory information, a statistical value of an inventory decrease quantity per unit period, and treats the statistical value as an inventory quantity that decreases in the subject unit period.

5. The demand forecasting apparatus according to claim 4, wherein
for subject business operators in the order of downstream business operators in a flow between business operators of the forecasting subject item, the demand forecasting apparatus forecasts a demand that occurs to the supplier that is an upstream business operator of the subject business operators, and
the future inventory estimation unit, when there is no downstream business operator for the subject business operator, treats the statistical value as an inventory quantity that decreases in the subject unit period, and when there is the downstream business operator for the subject business operator, treats a demand from the downstream business operator as an inventory quantity that decreases in the subject unit period.

6. The demand forecasting apparatus according to any one of claims 2 to 5 further comprising
a past inventory estimation unit to refer to logistics information indicating a transition that occurs in a logistics process for the forecasting subject item at the supply destination, and to estimate an inventory quantity of the supply destination for each unit period of a past reference period up to the unit period to which the processing execution time point belongs, wherein
the future inventory estimation unit estimates a future inventory quantity using the inventory quantity estimated by the past inventory estimation unit as a past inventory quantity indicated in the past inventory information.

7. The demand forecasting apparatus according to claim 6, wherein
the past inventory estimation unit sets an initial value for an inventory quantity in the unit period before the reference period of the unit period to which the processing execution time point belongs, and for unit periods in the order from the unit period next to the unit period before the reference period to the unit period to which the processing execution time point belongs, estimates an inventory quantity in the unit period to which the processing execution time point belongs by calculating an inventory quantity in the subject unit period by adding an inventory quantity that increases in the subject unit period indicated in the logistics information and subtracting an inventory quantity that decreases in the subject unit period indicated in the logistics information, to/from an inventory quantity in the unit period before the subject unit period.

8. The demand forecasting apparatus according to claim 7, wherein
the logistics information indicates a transition that occurs in a logistics process for a usage product that is a product to be produced using the forecasting subject item as a component, and
the past inventory estimation unit refers to component configuration information indicating the number of forecasting subject items to be used in the usage product, and specifies an inventory quantity that decreases in the subject unit period by taking into account a usage quantity of the forecasting subject item calculated from a production number of the usage products.

9. A demand forecasting method comprising:
by a computer, assuming that an inventory increases due to an order being placed in accordance with an order condition and an order quantity indicated in order model information and the inventory decreases in accordance with a transition of a past inventory quantity indicated in past inventory information at a supply destination of a forecasting subject item, and estimating a future inventory quantity at the supply destination, and
by the computer, forecasting that a demand for the order quantity indicated in the order model information occurs to a supplier at a time point when the order condition indicated in the order model information is satisfied in the estimated future inventory quantity.

10. A demand forecasting program for causing a computer to function as a demand forecasting apparatus to execute:
a future inventory estimation process to assume that an inventory increases due to an order being placed in accordance with an order condition and an order quantity indicated in order model information and the inventory decreases in accordance with a transition of a past inventory quantity indicated in past inventory information at a supply destination of a forecasting subject item, and to estimate a future inventory quantity at the supply destination, and
a demand forecasting process to forecast that a demand for the order quantity indicated in the order model information occurs to a supplier at a time point when the order condition indicated in the order model information is satisfied in the future inventory quantity estimated by the future inventory estimation process.
